# EUROPEAN PATENT SPECIFICATION

(11) **EP 0 628 735 B1**
(45) Date of publication and mention of the grant of the patent: **29.10.1997**
(21) Application number: 94201387.1
(22) Date of filing: 17.05.1994
(51) Int. Cl.: F16B 12/40, F16B 12/44, A47B 13/02

(54) **Releasable connection for an office furnishing**
Lösbare Verbindung für Büromöbel
Connexion détachable pour ameublement de bureau

(30) Priority: 25.05.1993 NL 9300889
(43) Date of publication of application: 14.12.1994
(73) Proprietor: GISPEN INTERNATIONAL B.V., NL-4104 AZ Culemborg (NL)
(72) Inventor: De Boer, Peter, NL-1018 VB Amsterdam (NL)
(74) Representative: Hoijtink, Reinoud

(56) References cited:
- CH-A- 376 623
- DE-A- 2 342 995
- DE-A- 4 142 953

## Description

The invention relates to a releasable connection between a U-shaped beam of for instance an office table and an element for connecting thereto, for instance a table leg or cross beam.

It is the object of the invention to provide a rapidly and simply effected coupling between different elements of an office furnishing, for instance a table. The connection must preferably be as universal as possible, with the understanding that the coupling can be effected between for example a table leg or a cross beam for supporting a table leaf.

DE-A-2342995 describes connection of an element to a box beam, by an attachment piece on the element extending through a side wall of the beam and being secured by a coupling piece inserted axially into the end of the beam.

The object is achieved according to the invention by openings lying in register in the limbs of the U-shaped beam, an attachment piece coupled to the element for connecting, placeable through a slot in the web of the U and having an opening corresponding in shape and size with the openings in the limbs, a close-fitting coupling piece placeable through the openings in the limbs and attachment piece, and a clamping member displaceable by a member connected to the coupling piece to exert a clamping force on the attachment piece.

A particularly advantageous embodiment of a clamping member consists of a ball element displaceable in a channel transversely of the longitudinal direction of a coupling piece. The ball element can be driven by a screw bolt movable transversely of the channel and engaging on the ball element. The clamping force exerted by the ball element is controlled by tightening the screw bolt.

In the web of the U a slot can further be arranged for passage of a fastening screw rotatable into a coupling piece connected to a further element. If the coupling piece is connected to for instance the cross beam, the desired coupling can thus be obtained by tightening the fastening screw.

In preference multiple pairs of openings lying in register are arranged in longitudinal direction of the U-shaped beam. This offers the possibility of coupling for instance a table leg at a location where, in view of the lay-out, connection to other items of furniture and the like, this is most desirable.

The cross section of the channel at the end thereof is chosen less than the diameter of the ball element in order to avoid the ball element leaving the channel.

The invention is further elucidated with reference to the drawings of an embodiment. In the drawings:

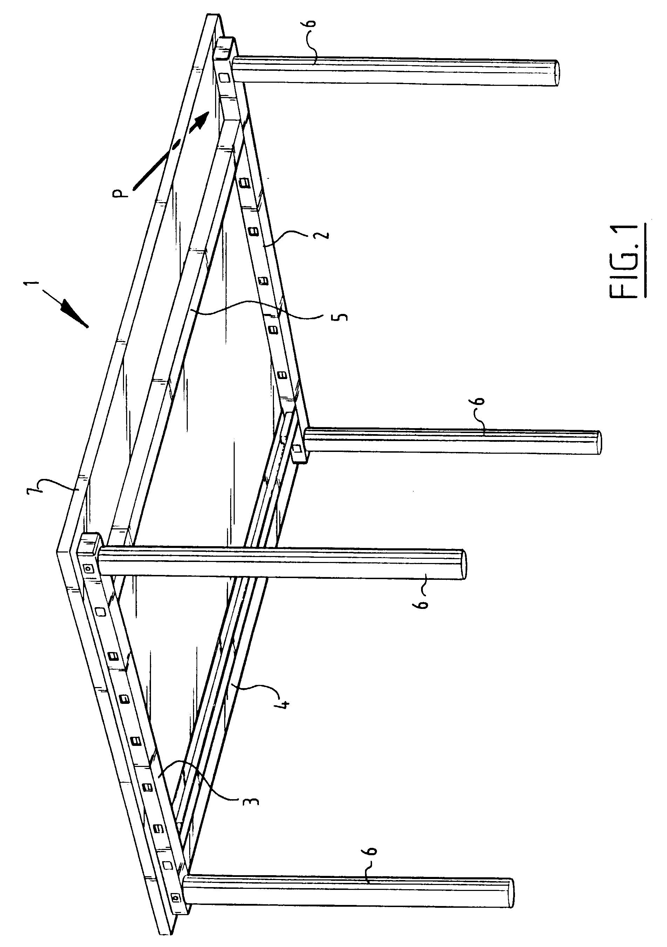

figure 1 shows a perspective bottom view of a table in which the invention is applied;
figure 2 is a perspective view on a larger scale in the direction of the arrow P in fig. 1; and
figure 3 is a sectional view along the line III-III in figure 2.

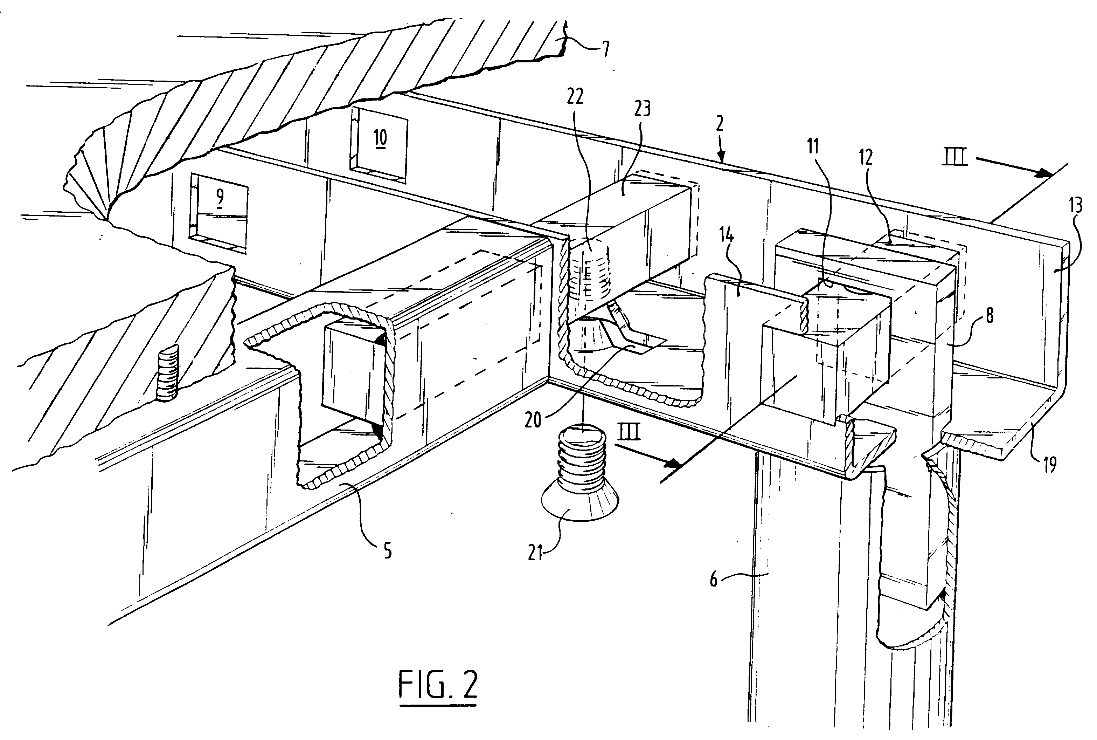

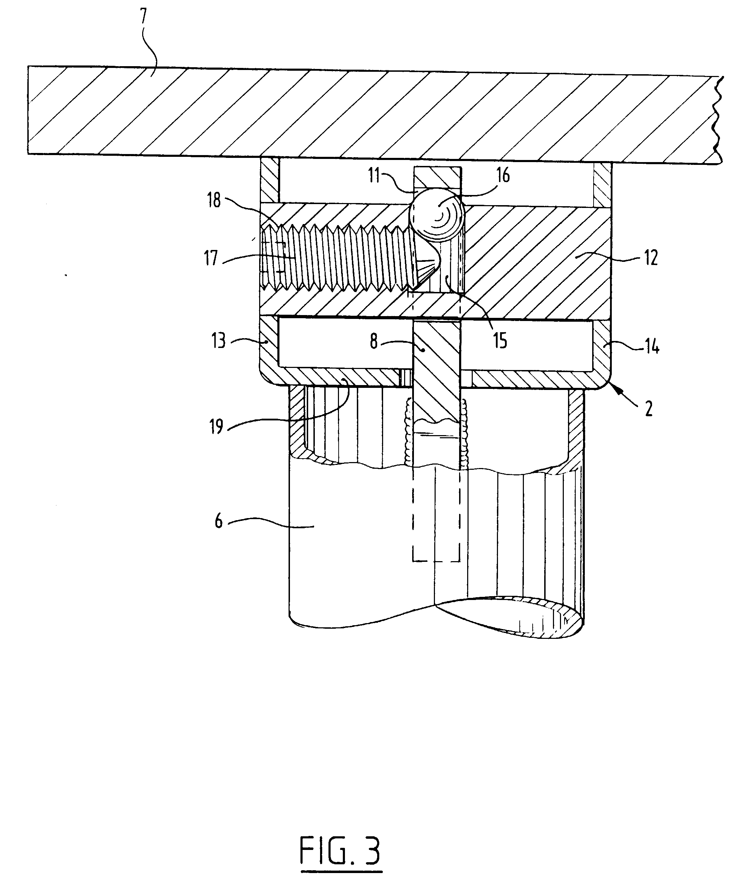

The table 1 comprises two longitudinal beams 2, 3 and two cross beams 4, 5. As is usual, the table supports on legs, for instance 6. The table top 7 is supported by the longitudinal and cross beams. The leg is provided at the top end (figure 2) with an attachment piece 8. A number of pairs of openings lying in mutual register, for example 9, 10, are arranged in the limbs of the U of the longitudinal beam 2. The attachment piece 8 has a corresponding opening 11. A coupling piece 12 is placed in close-fitting manner through the opening 11 and the pair of openings in the limbs of the U 13 and 14. Arranged in coupling piece 12 is a channel 15 in which a ball element 16 is displaceable. Displacement of the ball element 16 is effected by turning a screw bolt 17 which is received into a threaded channel 18 oriented transversely of channel 15. Tightening of screw bolt 17 exerts in figure 3 an upward directed force on the ball element, which results in a clamping force on attachment piece 8, whereby locking of the attachment piece and the table leg connected thereto is achieved. Reverse rotation of screw bolt 17 through a few turns releases the clamping force of ball element 16 and decoupling can take place by retracting the coupling piece 12 in horizontal direction in figure 3. In the web 19 of the U are arranged lengthwise slots 20 for passage of a fastening screw 21 which can be turned into a close-fitting threaded hole 22 in a coupling piece 23. A cross beam 5 connected to a coupling piece 23 can thus be connected to the longitudinal beam 2.

## Claims

1. Releasable connection between a U-shaped beam of for instance an office table and an element for connecting thereto, for instance a table leg or cross beam,
**characterized by** openings lying in register in the limbs of the U-shaped beam (2), an attachment piece (8) coupled to the element (6) for connecting, placeable through a slot in the web of the U and having an opening (11) corresponding in shape and size with the openings in the limbs, a close-fitting coupling piece (12) placeable through the openings in the limbs and attachment piece, and a clamping member (16) displaceable by a member connected to the coupling piece to exert a clamping force on the attachment piece.

2. Connection as claimed in claim 1, **characterized in that** the clamping member (16) is a ball element displaceable in a channel (15) transversely of the longitudinal direction of the coupling piece.

3. Connection as claimed in claim 2, **characterized in that** the displacement of the ball element is driven by a screw bolt (17) movable transversely of the channel and engaging on the ball element.

4. Connection as claimed in claims 1-3, **characterized in that** in the web of the U is further arranged a slot for passage of a fastening screw (21) rotatable into a coupling piece (23) connected to a further element (5).

5. Connection as claimed in claims 1-4, **characterized in that** multiple pairs of openings (9,10) lying in register are arranged in longitudinal direction of the U-shaped beam.

6. Connection as claimed in claim 2, **characterized in that** the cross section of the channel at the end thereof is chosen less than the diameter of the ball element.

## Patentansprüche

1. Lösbare Verbindung zwischen einem U-förmigen Träger, beispielsweise von einem Bürotisch, und einem daran zu befestigendem Bauteil (6), beispielsweise einem Tischbein oder Querholm,
**gekennzeichnet** durch
Öffnungen, die zueinander fluchtend in den Schenkeln des U-förmigen Trägers (2) liegen, ein Befestigungsstück (8), das zur Verbindung an das Bauteil (6) gekoppelt ist, das durch einen Schlitz im Steg des U plazierbar ist und eine Öffnung (11) hat, die in Form und Größe mit den Öffnungen in den Schenkeln übereinstimmt, ein formschlüssig passendes Kupplungsstück (12), das durch die Öffnungen in den Schenkeln und dem Befestigungsstück plazierbar ist, und ein Klemmelement (16), das durch ein mit dem Kupplungsstück verbundenes Bauelement verschiebbar ist, um auf das Befestigungsstück eine Klemmkraft auszuüben.

2. Verbindung nach Anspruch 1,
dadurch **gekennzeichnet**, daß das Klemmelement (16) eine Kugel ist, die in einem Kanal (15) quer zur Längsrichtung des Kupplungsstückes verschiebbar ist.

3. Verbindung nach Anspruch 2,
dadurch **gekennzeichnet**, daß die Verschiebung der Kugel durch einen Schraubbolzen (17) erfolgt, der zum Kanal quer verstellbar ist und an der Kugel angreift.

4. Verbindung nach Anspruch 1 bis 3,
dadurch **gekennzeichnet**, daß im Steg des U weiterhin ein Schlitz für den Durchgang einer Befestigungsschraube (21) vorgesehen ist, die in ein Kupplungsstück (23) eindrehbar ist, welches mit einem weiteren Bauteil (5) verbunden ist.

5. Verbindung nach Anspruch 1 bis 4,
dadurch **gekennzeichnet**, daß mehrere Paare von zueinander fluchtenden Öffnungen (9, 10) in Längsrichtung des U-förmigen Trägers angeordnet sind.

6. Verbindung nach Anspruch 2,
dadurch **gekennzeichnet**, daß der Querschnitt des Kanals an seinem Ende so gewählt ist, daß er kleiner als der Durchmesser der Kugel ist.

## Revendications

1. Connexion détachable entre une poutre en U d'une table de bureau par exemple et un élément destiné à s'y connecter, un pied ou une poutre transversale de table par exemple, caractérisée par des ouvertures disposées de manière coïncidante dans les ailes de la poutre (2) en U, une pièce de fixation (8) reliée à l'élément (6) à connecter, qui peut être placée à travers une encoche pratiquée dans le plat du U et ayant une ouverture (11) dont la forme et la taille correspondent aux ouvertures dans les ailes, une pièce de liaison (12) à ajustement fin qui peut être placée à travers les ouvertures dans les ailes et à travers la pièce de fixation, et un organe de serrage (16) qui peut être déplacé par un organe relié à la pièce de liaison de façon à exercer une force de serrage sur la pièce de fixation.

2. Connexion selon la revendication 1, caractérisée en ce que l'organe de serrage (16) est un organe à bille qui peut se déplacer dans un canal (15) transversalement par rapport à la direction longitudinale de la pièce de liaison.

3. Connexion selon la revendication 2, caractérisée en ce que le déplacement de l'organe à bille est entraîné par un boulon fileté (17) mobile transversalement par rapport au canal et s'engageant sur l'élément à bille.

4. Connexion selon les revendications 1 à 3, caractérisée en ce que le plat du U comprend en outre une encoche destinée à assurer le passage d'une vis de serrage (21) pouvant tourner dans une pièce de liaison (23) connectée à un élément supplémentaire (5).

5. Connexion selon les revendications 1 à 4, caractérisée en ce que des multiples paires d'ouvertures (9, 10) disposées en étant repérées sont agencées dans la direction longitudinale de la poutre en U.

6. Connexion selon la revendication 2, caractérisée en ce que la section transversale à l'extrémité du canal est choisie pour être inférieure au diamètre de l'organe à bille.
